# EUROPEAN PATENT SPECIFICATION

(11) **EP 2 324 091 B1**
(45) Date of publication and mention of the grant of the patent: **03.07.2019**
(21) Application number: 09808758.8
(22) Date of filing: 19.08.2009
(51) Int. Cl.: B28B 7/38, B29C 33/60

(54) **METHOD OF PREPARING A MOLD SEALER, MOLD SEALER ASSEMBLY AND COMPOSITIONS THEREOF**
VERFAHREN ZUR HERSTELLUNG EINER FORMDICHTUNG, FORMDICHTUNGSANORDNUNG UND ZUSAMMENSETZUNGEN DARAUS
PROCÉDÉ DE PRÉPARATION D 'UN ENDUIT POUR MOULE, ENSEMBLE ENDUIT POUR MOULE ET SES COMPOSITIONS

(30) Priority: 20.08.2008 US 90421 P
(43) Date of publication of application: 25.05.2011
(73) Proprietor: Henkel IP & Holding GmbH, 40589 Düsseldorf (DE)
(72) Inventor: LU, Zheng, Glastonbury Connecticut 06073 (US); SCHULZ, Joseph, Newington Connecticut 06111 (US)
(74) Representative: Henkel IP Department
(86) International application number: PCT/US2009/054282
(87) International publication number: WO 2010/022133

(56) References cited:
- WO-A2-2006/106236
- US-A- 4 889 770
- US-A1- 2003 072 873
- US-A1- 2004 009 354
- US-A1- 2004 009 354
- US-A1- 2005 009 985
- US-A1- 2006 183 845
- US-A1- 2006 183 845
- US-A1- 2007 173 597
- US-A1- 2008 160 286
- US-B1- 6 322 850
- US-B2- 7 084 203

## Description

### FIELD OF THE INVENTION

This invention generally relates to mold sealer compositions that are effective for molding thermoplastic parts.

### BACKGROUND OF THE INVENTION

It is a common problem in the thermoplastic industry for molders to find that the efficiency of the semi-permanent release agent is sacrificed due to the use of high quality smooth mold surfaces, or highly filled thermoplastic compounds. In particular, the release agent cannot bond well onto the mold surfaces, particularly when chrome or nickel materials are employed as mold surfaces. The release agents are removed from the molds too easily, and as a result they do not perform very well over multiple releases from molds. This lack of adhesion can be demonstrated by rubbing the cured release agent off the mold surface.

It is also a common problem that the release number may be decreased due to the rubber flow or injection forces. In particular, the thermoplastic industry requires that mold coatings be highly durable, permitting a number of release cycles. However, most of the traditional release agents only last a few cycles before reapplication of release agent is needed. This problem increases the down time, the cost, and labor involved in reapplying the release agents.

Moreover, in addition to the need for mold sealers which have adequate release numbers, there is also a need for more effective from a performance standpoint as well as cost effective mold sealers.

WO 2006/106236 A2 discloses a durable coating composition for optimizing the molding/mold release number of a mold-release agent, wherein the composition is an emulsion comprising a resin, a surfactant, such as polyethoxylated isotridecyl alcohol; a catalyst, such as dioctyltin dilaurate; an adhesion promoter, such as 3-aminopropyltrihydroxysilane; an acid or base to adjust the pH between 4-13 and water. The composition is coated on a bladder and cured at 80-180°C, for example 10 minutes at 170°C.

US 4 889 770 A discloses an emulsion composition to impart durable release and lubrication to bladders, comprising dimethylpolysiloxane, aminoethylaminopropyltrimethoxysilane or alternatively other amino-containing trialkoxysilane, dibutyltin diacetate and toluene. The composition is cured at 150°C on the bladders.

US 6 322 850 B1 discloses an emulsified composition to facilitate multiple release of molded parts, comprising polydimethoxysilane; a silane, such as aminopropyltriethoxysilane or aminopropyltrinmethoxysilane; a surfactant; ethanol and water. The composition is coated on molds and cured at 160°C.

### SUMMARY OF THE INVENTION

The present invention is directed to sealed mold assemblies and methods for producing a seal on a mold.

In one aspect of the invention there is provided a sealed mold assembly comprising:
(a) a mold composed of a metal selected from the group consisting of steel, stainless steel, chrome, cast iron, aluminum, and nickel for forming a part, said mold having at least one surface;
(b) a coating on said at least one surface comprising a mold sealer composition having a pH of 10-11 comprising:
   (i) a silane having the formula I: 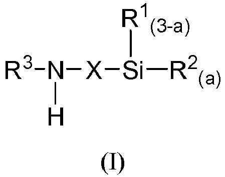 wherein:
      R¹ is selected from hydroxy and alkoxy;
      R² is alkyl, alkyene, hydride;
      R³ is selected from the group consisting of hydrogen and alkyl, wherein said alkyl is optionally substituted by an amino group or an alkoxysilyl group;
      X is C₁-C₆ alkylene; and
      a is 0 or 1;
   (ii) a carrier being water;
   (iii) a pH modifier selected from the group consisting of triethanolamine and triethyl amine.

In another aspect of the invention there is provided a method for producing a durable seal on a mold, comprising the steps of:
(a) providing a mold composed of a metal selected from the group consisting of steel, stainless steel, chrome, cast iron, aluminum, and nickel for forming a part, said mold having at least one surface;
(b) applying a mold sealer composition onto said at least one surface, said mold sealer composition having a pH of 10-11 comprising:
   (i) a silane having the formula I: 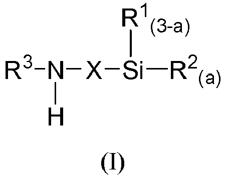 wherein:
      R¹ is selected from hydroxy and alkoxy;
      R² is alkyl, alkyene, hydride;
      R³ is selected from the group consisting of hydrogen and alkyl, wherein said alkyl is optionally substituted by an amino group or an alkoxysilyl group;
      X is C₁-C₆ alkylene; and
      a is 0 or 1;
   (ii) a carrier being water;
   (iii) a pH modifier selected from the group consisting of triethanolamine and triethyl amine; and
(c) exposing said mold sealer composition to curing conditions for a time sufficient to effectuate at least partial cure, thereby forming a durable seal on the mold.

In some embodiments of the aspects of the invention, the mold sealer compositions may further contain a cross-linking agent. Optionally, the mold sealer compositions of the present invention may contain additional additives, such as, e.g., slip agents (such as a functional or non-functional siloxanes), emulsifiers, dyes, catalysts, biocides, cure modifying agents, fillers, viscosity modifying agents and combinations thereof.

The mold sealer compositions in each aspect of the present invention may be curable by various mechanisms such as heat, moisture and/or ambient condensation. Desirably, the compositions are heat curable. When applied as a coating, the mold sealer compositions cure to a finish having a high durability permitting a number of releases (e.g., at least 3 releases, desirably at least 4 releases, and more desirably at least 5 releases), without transfer of the mold release composition to a part. The mold sealer compositions in each aspect of the present invention are stable, e.g., having no or significantly reduced precipitation, separation, or performance deterioration for a substantial period, e.g., desirably for at least about six months, more desirably for about one year.

### BRIEF DESCRIPTION OF THE DRAWINGS

Figure 1 shows mold sealer results for both chrome and steel substrates.
Figure 2 shows results of the mold sealer's shelf life.

### DETAILED DESCRIPTION OF THE INVENTION

The present invention is based on mold sealer compositions that are durable, cost effective, and permit multiple releases when applied as a coating. The present invention is directed to sealed mold assemblies prepared with said mold sealer compositions.

The mold sealer compositions include a curable component, desirably, a heat curable component. The term "cure" or "curing," as used herein, refers to a change in state, condition, and/or structure in a material that is usually, but not necessarily, induced by at least one variable, such as time, temperature, radiation, presence and quantity in such material of a curing catalyst or accelerator, or the like. The terms "cure" or "curing" cover partial as well as complete curing.

The curable component contains a silane that has both amino and alkoxy functional groups, a carrier, and a cross-linking agent. The silane has the general formula: 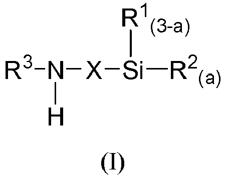 wherein:
R¹ is selected from of hydroxy and alkoxy;
R² is alkyl, alkyene, or hydride;
R³ is selected from the group consisting of hydrogen and alkyl, wherein said alkyl is optionally substituted by an amino group or an alkoxysilyl group;
X is C₁-C₆ alkylene (i.e., C₁, C₂, C₃, C₄, C₅, C₆, desirably C₃); and
a is 0 or 1.

Non-limiting examples of useful silanes of the present invention include n-(2-aminoethyl)-3-aminoproplymethyldimethoxysilane, 3-aminopropyltriethoxysilane, methacryloxypropyltirmethoxysilane, methyltriethoxysilane, aminobutyltriethoxysilane, bis(3-trimethoxysilylpropyl)amine, aminopropylsilanetriol, 4-aminobutyltriethoxysilane, 3-aminopropylmethyldimethoxysilane, n-(2-aminoethyl)-3-aminopropyltrimethoxysilane, 3-aminopropylsilanetriol, as well as oligomers of the above preformed or formed in situ from above monomers, as well as combinations thereof. These silanes are commercially available from sources such as Gelest, Dow Corning, Shin-Etsu Chemical, and Momentive Performance Materials.

The silane of the present invention is present in the mold sealer composition in an amount effective to obtain the desired bonding strength and release durability. Desirably, the silane is present in the mold sealer composition in an amount of 0.1-10 w/w %, more desirably, 0.3-5 w/w/ %, and even more desirably 0.5-2 w/w %.

The mold sealer compositions may desirably contain cure components other than the silane of formula 1, as are known in the art. In particular, if a silane is not water soluble or only partially water soluble, an emulsifier or emulsifiers are advantageous for stability.

Additional silanes or crosslinking agents can be used with the aminosilane of formula (I) to modify the cross linking density of the sealer coating. Useful examples of such modifiers are tetra- or trialkoxy silanes. The addition of a crosslinking modifier is particularly useful when formula (I) has less than 3 crosslinking groups.

The heat curable component desirably includes a cross-linking agent, either formula (I) or a modifier. Cross-linking is the attachment of two or more chains of polymers by, for example, bridges and cross bridges, comprising either an element, a group, or a compound. Desirably, the cross-linking agent is selected from the group consisting of alkoxy functionalized silanes and hydroxyl functionalized silanes.

Suitable cross-linking agents may be selected from a variety of crosslinkers, such as, but not limited to: a monomeric, cyclic, oligomeric or polymeric silazane, ,an enoxy-functional silazane, a silicon hydride, an alkoxy functional silane such as trialkoxy- and trialkoxysilanes, a methylethylketoxime functional silane, an acetoxy functional silane, an enoxy functional silane, an amino-functional silane, and combinations thereof. More specifically, suitable crosslinkers include, but are not limited to: tris methylamino functional silane, tris enoxy functional silane, hydride functional silane, and cyclic trisilazane. Particularly useful crosslinking modifiers are functionalized polydimethylsiloxane (PDMS), e.g. hydroxyl terminated PDMS.

Cross-linking agents desirably are present in the mold release compositions of the present invention in an amount from about 0.01% to about 10% w/w, more desirably from about 0.3% to about 3% w/w.

The mold sealer compositions contain a water based carrier, including, for example, as part of a solution or emulsion composition.

The mold sealer compositions in each aspect of the present invention may contain a number of other optional additives, such as, e.g., bases, catalysts, biocides, slip agents, dyes, cure modifying agents, fillers, viscosity modifying agents, and combinations thereof.

A slip agent used in the present invention may be a functional or a non-functional siloxane.

The base used in the present invention may be triethanolamine, triethyl amine, KOH or any other suitable base. Any type of base known in the art may be used in accordance with this invention. Desirably, non-protonated amines may be used as suitable bases, as they may provide silanes with better bond-ability to metal/mold surfaces.

The function of the base may be useful for adjusting the pH to the basic region so that the amino group of the formula (I) is deprotonated.

Any conventional catalyst may be employed provided the mold release properties of the compositions are not compromised. Suitable catalysts that may be used include conventional organometallic catalysts, such as, water and solvent based organic titanium derivatives and organic tin derivatives, tertiary amine compounds, and certain early transition metal compounds. Generally, the catalyst is present in an amount from about 0 to 1.0% w/w. This concentration, however, may be varied depending upon the desired cure rate.

The pH of the mold sealer composition is from 10 to 11, and desirably from 10.5 to 10.8. Lower pH may result in a more stable silanol having a longer shelf life, however, a sealer coating having a high pH is more effective in application (e.g., durability). Generally, the compositions may be formulated to achieve a balance between durability, i.e. the number of releases, ease of release and stability. The selection of pH in combination with other additives such as emulsifiers enhance the ability to achieve such a balance of properties.

The mold sealer composition does also contain a pH modifier. The pH modifier may be added, in an amount effective to improve the shelf life of the mold sealer composition and as a deprotonation agent. The pH modifier is added to maintain the desired pH from 10 to 11, and desirably from 10.5 to 10.8. The pH modifiers are selected from the group consisting of triethanolamine and triethyl amine.

In accordance with the present invention, the mold sealer compositions desirably are applied to a part to form a mold sealer coating. Upon application, the compositions cure at ambient or elevated temperatures to form the mold sealer coatings. The application of heat is not necessary in some embodiments of each aspect of the present invention, however temperature may desirably be used to affect curing speed. Thus, it may be desirable to apply heat, depending upon the components selected. In room temperature curing embodiments, cure time desirably ranges between about 2 minutes and about 48 hours. Examples of suitable heat applications, include, e.g., curing for 5 minutes at 204°C [400°F], curing for 10 minutes at 163°C [325°F], or curing 30 minutes at 93°C [200°F].

The cure time may be shortened upon addition of certain appropriate catalysts, as described above. The compositions desirably cure to a high durability finish that permits a number of releases without contaminating a released part by transfer of the release composition from the mold to the part. In one embodiment, the cured compositions permit at least 3 releases, desirably at least 4 releases, more desirably at least 5 releases, even more desirably at least 6-9 releases, and most desirably at least 10 releases.

Desirably, the cured mold sealer compositions in each aspect of the present invention are stable, e.g., having no or significantly reduced precipitation, separation, or performance deterioration for a substantial period, e.g., desirably for at least about six months, more desirably for about at least one year. The presence of precipitation and separation can normally be determined by unaided observance, the naked eye.

The mold sealer compositions are applied to form the sealed mold assembly of the present invention. The sealed mold assembly contains a mold forming a part having a least one surface, and a coating on the at least one surface, wherein the coating comprise the mold sealer composition having a pH of 10-11 comprising:
(i) a silane having the formula I: 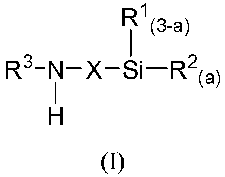 wherein:
   R¹ is selected from hydroxy and alkoxy;
   R² is alkyl, alkyene, hydride;
   R³ is selected from the group consisting of hydrogen and alkyl, wherein said alkyl is optionally substituted by an amino group or an alkoxysilyl group;
   X is C₁-C₆ alkylene; and
   a is 0 or 1;
(ii) a carrier being water;
(iii) a pH modifier selected from the group consisting of triethanolamine and triethyl amine.

The mold forming part is composed of a metal selected from the group consisting of steel, stainless steel, chrome, cast iron, aluminum and nickel. The mold sealer composition may be chemically bonded to the at least one surface.

The present invention also contemplates sealed molds formed by the process of:

comprising the steps of:
(a) providing a mold composed of a metal selected from the group consisting of steel, stainless steel, chrome, cast iron, aluminum, and nickel for forming a part, said mold having at least one surface;
(b) applying a mold sealer composition onto said at least one surface, said mold sealer composition having a pH of 10-11 comprising:
   (i) a silane having the formula I: 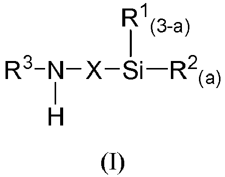 wherein:
      R¹ is selected from hydroxy and alkoxy;
      R² is alkyl, alkyene, hydride;
      R³ is selected from the group consisting of hydrogen and alkyl, wherein said alkyl is optionally substituted by an amino group or an alkoxysilyl group;
      X is C₁-C₆ alkylene; and
      a is 0 or 1;
   (ii) a carrier being water;
   (iii) a pH modifier selected from the group consisting of triethanolamine and triethyl amine; and
(c) exposing said mold sealer composition to curing conditions for a time sufficient to effectuate at least partial cure, thereby forming a durable seal on the mold.

Any suitable curing conditions maybe be used, such as, e.g., heat curing (e.g., 204°C [400°F] for 5 minutes, 163°C [325°F] for 10 minutes, or 93°C [200°F] for 30 minutes).

### EXAMPLES

### Example 1

Table 1 shows the weight percent of five (5) inventive compositions:

**Table 1**

| Components: | Compositions (wt.%) | | | | |
|---|---|---|---|---|---|
| | 1 | 2 | 3 | 4 | 5 |
| Silane #1 (n-(2-aminoethyl)-3-aminopropylmethyldimethoxysilane | 1.00 | None | None | None | None |
| Silane #2 (3-aminopropyltriethoxysilane) | None | 1.00 | None | None | None |
| Silane #3 (methacryloxypropyltrimethoxysilane) | None | None | 1.00 | None | None |
| Silane #4 (methyltriethoxysilane) | None | None | None | 1.00 | None |
| Silane #5 (aminobutyltriethoxysilane) | None | None | None | None | 1.00 |
| Water | 98.211-98.83 | 98.211-98.83 | 98.211-98.541 | 98.211-98.541 | 98.211-98.83 |
| pH modifier¹ | 0.17-0.50 | 0.17-0.50 | 0.17-0.50 | 0.17-0.50 | 0.17-0.50 |
| silicone glycol copolymers ² | 0-0.0723 | 0-0.0723 | 0.0723 | 0.0723 | 0-0.0723 |
| alcohol ethoxylate³ | 0-0.0723 | 0-0.0723 | 0.0723 | 0.0723 | 0-0.0723 |
| ethoxylated fatty acids⁴ | 0-0.0723 | 0-0.0723 | 0.0723 | 0.0723 | 0-0.0723 |
| alkyl diphenyloxide disulfonate salts⁵ | 0-0.0723 | 0-0.0723 | 0.0723 | 0.0723 | 0-0.0723 |

| | | | | | |
|---|---|---|---|---|---|
| ¹ Triethylamine, a base was used. ² Silicone glycol copolymers sold under the trade name of Silwet 7605 (Momentive). ³ Alcohol ethoxylate sold under the trade name of Tomadol 900 (Air Products). ⁴ Ethoxylated fatty acids sold under the trade name of T-Maz 20 (BASF). ⁵ Alkyl diphenyloxide disulfonate salts sold under the trade name of Dowfax 2A1 (Dow Chemical). | | | | | |

Table 2 shows the weight percent of compositions 1, 2, 5 with the presence of the emulsifier and compositions 1A, 2A, and 5A without the emulsifier:

**Table 2**

| Components: | Compositions (wt.%) | | | | | |
|---|---|---|---|---|---|---|
| | 1 | 1A | 2 | 2A | 5 | 5A |
| Silane #1 (n-(2-aminoethyl)-3-aminopropylmethyldimethoxysilane | 1.00 | 1.00 | None | None | None | None |
| Silane #2 (3-aminopropyltriethoxysilane) | None | None | 1.00 | 1.00 | None | None |
| Silane #3 (methacryloxypropyltrimethoxysilane) | None | None | None | None | None | None |
| Silane #4 (methyltriethoxysilane) | None | None | None | None | None | None |
| Silane #5 (aminobutyltriethoxysilane) | None | None | None | None | 1.00 | 1.00 |
| Water | 98.211-98.83 | 98.211-98.83 | 98.211-98.83 | 98.211-98.541 | 98.211-98.541 | 98.211-98.83 |
| pH modifier ¹ | 0.17-0.50 | 0.17-0.50 | 0.17-0.50 | 0.17-0.50 | 0.17-0.50 | 0.17-0.50 |
| silicone glycol copolymers ² | 0.0723 | None | 0.0723 | None | 0.0723 | None |
| alcohol ethoxylate³ | 0.0723 | None | 0.0723 | None | 0.0723 | None |
| ethoxylated fatty acids⁴ | 0.0723 | None | 0.0723 | None | 0.0723 | None |
| alkyl diphenyloxide disulfonate salts⁵ | 0.0723 | None | 0.0723 | None | 0.0723 | None |

| | | | | | | |
|---|---|---|---|---|---|---|
| ¹ Triethylamine, a base was used. ² Silicone glycol copolymers sold under the trade name of Silwet 7605 (Momentive). ³ Alcohol ethoxylate sold under the trade name of Tomadol 900 (Air Products). ⁴ Ethoxylated fatty acids sold under the trade name of T-Maz 20 (BASF). ⁵ Alkyl diphenyloxide disulfonate salts sold under the trade name of Dowfax 2A1 (Dow Chemical). | | | | | | |

The compositions 1, 2, and 5, which contain water-soluble silanes, were carried out with the presence of emulsifier(s) and without the presence of emulsifier(s). The results showed no observable differences with or without emulsifier(s) indicating that soluble silanes do not require emulsifiers.

Table 3 shows the weight percent of compositions 3 and 4 with the presence of the emulsifier and compositions 3A and 4A without the emulsifier:

**Table 3**

| Components | Compositions (wt.%) | | | |
|---|---|---|---|---|
| | 3 | 3A | 4 | 4A |
| Silane #1 (n-(2-aminoethyl)-3-aminopropylmethyldimethoxysilane | 1.00 | 1.00 | None | None |
| Silane #2 (3-aminopropyltriethoxysilane) | None | None | 1.00 | 1.00 |
| Silane #3 (methacryloxypropyltrimethoxysilane) | 1.00 | 1.00 | None | None |
| Silane #4 (methyltriethoxysilane) | None | None | 1.00 | 1.00 |
| Silane #5 (aminobutyltriethoxysilane) | None | None | None | None |
| Water | 98.211-98.83 | 98.211-98.83 | 98.211-98.83 | 98.211-98.541 |
| pH modifier ¹ | 0.17-0.50 | 0.17-0.50 | 0.17-0.50 | 0.17-0.50 |
| silicone glycol copolymers ² | 0.0723 | None | 0.0723 | None |
| alcohol ethoxylate³ | 0.0723 | None | 0.0723 | None |
| ethoxylated fatty acids⁴ | 0.0723 | None | 0.0723 | None |
| alkyl diphenyloxide disulfonate salts⁵ | 0.0723 | None | 0.0723 | None |

| | | | | |
|---|---|---|---|---|
| ¹ Triethylamine, a base was used. ² Silicone glycol copolymers sold under the trade name of Silwet 7605 (Momentive). ³ Alcohol ethoxylate is sold under the trade name of Tomadol 900 (Air Products). ⁴ Ethoxylated fatty acids sold under the trade name of T-Maz 20 (BASF). ⁵ Alkyl diphenyloxide disulfonate salts sold under the trade name of Dowfax 2A1 (Dow Chemical). | | | | |

In contrast with Table 2, compositions 3A and 4A, which contain silanes that are water-insoluble, when tested without emulsifier(s), could not be mixed to form a homogeneous solution. The silanes could be clearly seen floating on top of the water, even after extensive mixing. Therefore, there was no reliable way for compositions 3A and 4A to create a uniform coating on the mold surface, and as a result these formulas could not be tested for their effectiveness as a mold sealer.

Experiments were performed to evaluate the effectiveness (releasibility) of the seal of mold sealer compositions shown in Table 1 on various types of mold materials (stainless steel and/or chrome plated molds).

The following protocol was followed to test the releasibility:
1. Four coats of the inventive mold sealer composition were applied to a pair of metal panel using a spray gun, adjusted to spray 1 to 1.5 mL/second. After applying the inventive mold sealer composition, it was allowed to cure for 10 minutes at 163°C [325°F].
2. After the inventive mold sealer composition was cured, applied a commercially available silicone-based release agent (Frekote R-150, available from Henkel) was applied to the panels, using the same spray gun and allowed to cure for 10 minutes at 163°C [325°F].
3. After curing, the panels were tested for releasibilty by placing a small piece of uncured EPDM rubber between two of these panels, which was then placed into a hot press using an applied load of 5000 pounds and a temperature of 177°C [350°F]. After 25 minutes the rubber was fully cured, and the panels were removed from the hot press.
4. The two panels were separated, and the cured rubber was removed.

The standard for assessing releasibility was based on a scale of 1 (worst) to 5 (best), as follows:
A value of 5 indicates an automatic release, with essentially no force required to release the rubber.
A value of 4 indicates that a small amount of force is required for release.
A value of 3 indicates that a moderate amount of force is required for release.
A value of 2 indicates that a high amount of force is required for release.
A value of 1 indicates no release at all: the rubber cannot be removed without being damaged.

Plus and minus signs were used to show slight differences in releasibility, e.g., a "4+" is slightly easier than a "4", but not as easy as a "5-".

Tests were performed on both steel and chrome molds, using Frekote R-150 with and without the mold sealer. The results were compared by counting the number of extremely easy, or "auto" releases that could be achieved - a value of "5" in the releasibility scale. Auto releases are defined as releases which require essentially no force at all to remove the cured rubber from the mold surface.

### Stainless Steel Molds

Following the above protocol, a comparison was made to test inventive mold sealer compositions nos. 1, 2, 3 and 5 on stainless steel.

Comparison tests were conducted to test the molds releasibility without sealer but with release agent, and releasibility without a sealer or a release agent. The release test was repeated multiple times, to determine how many easy releases could be obtained from a single application of each composition. The following results were obtained:

**Table 2**

| Stainless Steel Molds: | | Releasibility | | | | | | | | | | | | | | | |
|---|---|---|---|---|---|---|---|---|---|---|---|---|---|---|---|---|---|
| Sealer: | Release Agent: | 1 | 2 | 3 | 4 | 5 | 6 | 7 | 8 | 9 | 10 | 11 | 12 | 13 | 14 | 15 | 16 |
| Control 1: no sealer | no release agent | 3 | 3 | | | | | | | | | | | | | | |
| Control 2: no sealer | Frekote R-150 | 5 | 5 | 5- | 4+ | 4+ | 4 | 4 | 4 | 3 | | | | | | | |
| Silane 1 | Frekote R-150 | 5 | 5 | 5 | 5 | 5- | 5- | 4+ | 4+ | 4- | 4 | 4 | 4- | | | | |
| Silane 2 | Frekote R-150 | 5 | 5 | 5 | 5 | 5 | 5 | 5 | 5 | 5 | 5 | 5 | 5 | 5 | 5 | 5 | 5 |
| Silane 3 | Frekote R-150 | 5 | 5 | 4+ | 4 | 4 | 3 | 3 | | | | | | | | | |
| Silane 5 | Frekote R-150 | 5 | 5 | 5 | 5 | 5- | 5- | 5- | 4+ | | | | | | | | |

As illustrated in Table 2, the mold sealer compositions of the present invention obtained excellent releasibility properties on stainless steel as compared to the controls. As is also apparent from Table 2, the inventive compositions achieved at least 3.5-6 times as many releases cycles as the controls. When using the sealer on steel molds, it is possible to obtain 12 auto releases, where previously Frekote R-150 alone could only give one auto release.

### Chrome Plated Molds

Following the same protocol, a comparison was made to test inventive mold sealer compositions nos. 1, 2, 4 and 5 on chrome plated molds.

Comparison was made to a test without sealer but with release agent, and a test without sealer and release agent. The release test was repeated multiple times, to determine how many easy releases could be obtained from a single application of each formula. The following results were obtained:

**Table 3**

| Chrome Plated Molds: | | Releasibility | | | | | | | | | | | | | |
|---|---|---|---|---|---|---|---|---|---|---|---|---|---|---|---|
| Sealer: | Release Agent: | 1 | 2 | 3 | 4 | 5 | 6 | 7 | 8 | 9 | 10 | 11 | 12 | 13 | 14 |
| Control 1: no sealer | no release agent | 4- | 4- | 4- | | | | | | | | | | | |
| Control 2: no sealer | Frekote R-150 | 5 | 4 | 4- | 4- | | | | | | | | | | |
| Silane 1 | Frekote R-150 | 5 | 5 | 5 | 5- | 5- | 5 | 5 | 4+ | | | | | | |
| Silane 2 | Frekote R-150 | 5 | 5 | 5 | 5 | 5 | 5 | 5 | 5 | 5 | 5 | 5 | 5 | 5- | 5- |
| Silane 4 | Frekote R-150 | 5 | 5 | 4 | | | | | | | | | | | |
| Silane 5 | Frekote R-150 | 5 | 5 | 5 | 5 | 5 | 5- | 5- | 5- | 5- | 5- | 4+ | | | |

As illustrated in Table 3, the mold sealer compositions of the present invention obtained excellent releasibility properties on chrome plated molds. As noted in some instances, the inventive mold sealer compositions achieved 2-4 times the number of release cycles as compared to the control (no sealer and no release agent compositions.) When using the sealer on chrome molds, it is possible to obtain 12 auto releases, where previously R-150 alone could only give one auto release.

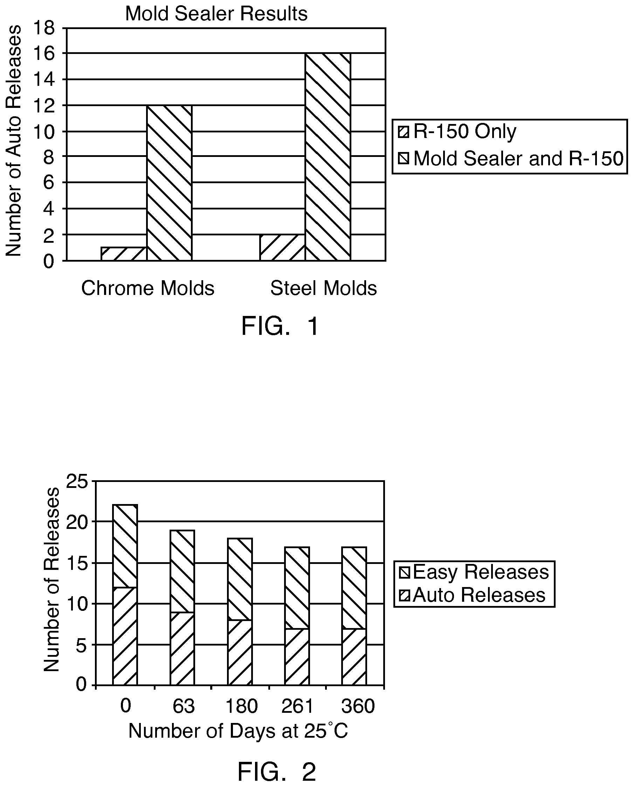

The results on chrome and steel substrates depicted in the chart of Fig. 1 illustrate graphically how beneficial this mold sealer can be for the thermoplastic and particularly the rubber molding industry. The inventive mold sealer compositions permit a significant greater number of releases from each application of release agent as compared to molds without the inventive sealer compositions. Such results additionally provide significant savings of time and money for users.

### Example 2

### Shelf Life Testing

### Mold: Chrome Molds

**Molding parameters:** Each of the inventive compositions 1-5 were tested over a period of 40 days of heat aging, which is approximately equal to 1 year at room temperature. 1 day of heat-aging is equivalent to 9 days of aging at room temperature.

**Application:** For each test during the shelf life study, the heat-aged samples of mold sealer were evaluated using the standard test method for rubber release. A heat-aged sample of mold sealer was removed from the oven and spray-applied to a chrome mold, using four coats. It was cured at 325°F for 10 minutes. Next, Frekote R-150 was applied to the panel using the same spray gun and allowed to cure for 10 minutes at 163°C [325°F]. Each panel was then tested for its ability to release EPDM rubber. The results were compared to determine how the performance of the mold sealer changes over time.

**Test Results:** The mold sealer was determined to have a shelf life of at least 1 year at room temperature (77°F, or 25°C). The results are provided in Fig. 2.

As indicated in the shelf life table in Fig. 2, the inventive composition continued to provide excellent release after 2, 4 and 6 months of aging on parts at room temperature.

The results in Fig. 2 further indicate that, although the sealer does shows a small decrease in performance over time after aging for the equivalent of 360 days at room temperature, the sealer still enables R-150 to achieve 7 auto releases and 17 good releases. This is a significant improvement over the 1 auto/good releases, which is possible without the sealer.

Release agent Frekote R-150 was applied to sealed molds as a touch-up coat after 17-23 auto/good releases. Each touch-up coat provided approximately the same amount of releases as the original sealed mold (e.g. 17-23). There was no need to re-apply the sealer after the mold surface was already sealed by formula (I).

### Example 3

### Corrosion Testing

A simple test was performed to determine if the mold sealer would cause corrosive damage to metal molds, because this is a common problem for water-based formulas. An excess amount of the mold sealer was applied to a steel panel and allowed to air dry overnight at room temperature. On the same panel, the same test was also performed using water and using Frekote R-150.

The results indicated that the inventive mold sealer composition did not cause rust to form on steel molds, whereas using water in combination with Frekote R-150 alone did cause rust formation. This is due to its unique chemistry, which does not cause oxidative damage to take place at the mold surface.

### Example 4

### Optional High-Cure Secondary Cure

The mold sealer was first cured at 163°C [325°F] for 10 minutes. After curing, the mold sealer was heated to 316°C [600°F] and held at that temperature for 1 hour. It was then cooled back down to 163°C [325°F], and Frekote R-150 was applied to the mold and cured for 10 minutes. After testing this panel for rubber release, it was able to give 20 auto releases, a significant improvement over the 12 auto releases which could be achieved without the secondary cure.

### Example 5

### Silane Concentration

Example 6 describes tests that were performed in order to determine the optimal amount of silane to use in a mold sealer composition.

Water- based samples were prepared using 0.5%, 1.0%, and 1.5% aminopropyltriethoxysilane (abbreviated as APTES).

These samples were applied to chrome panels, and tested using Frekote R-150 release agent, as described in the test method given earlier.

The results were as follows:

| Concentration | No. of Auto Releases |
|---|---|
| 0.5% APTES | 8 |
| 1.0% APTES | 12 |
| 1.5% APTES | 12 |

These results show that the optimal concentration is approximately 1.0% silane. There is little to no benefit to using a higher amount, and using a lower amount results in decreased performance.

## Claims

1. A sealed mold assembly comprising:
(a) a mold composed of a metal selected from the group consisting of steel, stainless steel, chrome, cast iron, aluminum, and nickel for forming a part, said mold having at least one surface;
(b) a coating on said at least one surface comprising a mold sealer composition having a pH of 10-11 comprising:
(i) a silane having the formula I: 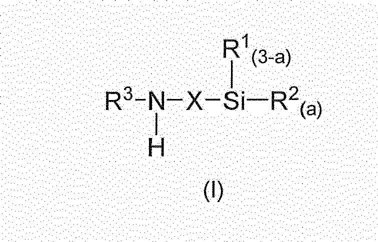 wherein:
R¹ is selected from the group consisting of hydroxy and alkoxy;
R² is alkyl, alkyene, hydride;
R³ is selected from the group consisting of hydrogen and alkyl, wherein said alkyl is optionally substituted by an amino group or an alkoxysilyl group;
X is C₁-C₆ alkylene; and
a is 0 or 1;
(ii) a carrier being water;
(iii) a pH modifier selected from the group consisting of triethanolamine and triethyl amine.

2. The assembly of claim 1, wherein said carrier is selected from the group consisting of an emulsion and a water-based solution.

3. The assembly of claim 1, further comprising a cross-linking agent, wherein said cross-linking agent is selected from the group consisting of alkoxy functionalized silanes and hydroxy functionalized silanes.

4. The assembly of claim 1, further comprising an emulsifier, wherein said emulsifier is selected from the group consisting of using non ionic and ionic surfactants with HLB from 3-25.

5. The assembly of claim 1, wherein said pH modifier is triethyl amine.

6. The assembly of claim 1, wherein X is C3 alkylene.

7. The assembly of claim 1, wherein said silane of formula I is 3-aminopropyltriethoxysilane.

8. The assembly of claim 1, wherein said silane of formula I is selected from the group consisting of: n-(2-aminoethyl)-3-aminopropylmethyidimethoxysilane; 4-aminobutyltriethoxysilane; 3-aminopropylmethyldimethoxysilane; n-(2-aminoethyl)-3-aminopropyltrimethoxysilane; bis(3-trimethoxysilylpropyl)amine; 3-aminopropylsilanetriol; and oligomers of above preformed or formed in situ from above monomer.

9. The assembly of claim 1, further comprising a catalyst selected from the group consisting of organic titanium compounds and organic tin compounds.

10. A method for producing a durable seal on a mold, comprising the steps of:
(a) providing a mold composed of a metal selected from the group consisting of steel, stainless steel, chrome, cast iron, aluminum, and nickel for forming a part, said mold having at least one surface;
(b) applying a mold sealer composition onto said at least one surface, said mold sealer composition having a pH of 10-11 comprising:
(i) a silane having the formula I: 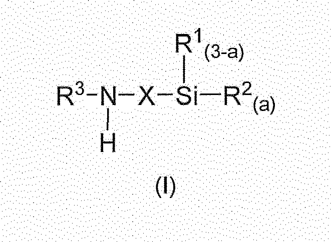 wherein:
R¹ is selected from the group consisting of hydroxy and alkoxy;
R² is alkyl, alkyene, hydride;
R³ is selected from the group consisting of hydrogen and alkyl, wherein said alkyl is optionally substituted by an amino group or an alkoxysilyl group;
X is C₁-C₆ alkylene; and
a is 0 or 1;
(ii) a carrier being water;
(iii) a pH modifier selected from the group consisting of triethanolamine and triethyl amine; and
(c) exposing said mold sealer composition to curing conditions for a time sufficient to effectuate at least partial cure, thereby forming a durable seal on said mold.

11. The method of claim 10, wherein said curing conditions are 400°F for 5 minutes or 200°F for 30 minutes.

## Patentansprüche

1. Versiegelte Formanordnung, umfassend:
(a) eine Form, die aus einem Metall zusammengesetzt ist, ausgewählt aus der Gruppe, bestehend aus Stahl, Edelstahl, Chrom, Gusseisen, Aluminium und Nickel zum Bilden eines Teils, wobei die Form mindestens eine Oberfläche aufweist;
(b) eine Beschichtung auf der mindestens einen Oberfläche, die eine Formdichtungszusammensetzung mit einem pH-Wert von 10-11 umfasst, umfassend:
(i) ein Silan mit der Formel I: 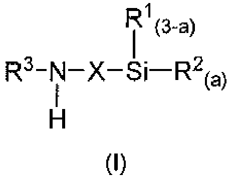 wobei:
R¹ ausgewählt ist aus der Gruppe, bestehend aus Hydroxy und Alkoxy;
R² Alkyl, Alkyen, Hydrid ist;
R³ ausgewählt ist aus der Gruppe, bestehend aus Wasserstoff und Alkyl, wobei das Alkyl gegebenenfalls durch eine Aminogruppe oder eine Alkoxysilylgruppe substituiert ist;
X C₁-C₆ Alkylen ist; und
a 0 oder 1 ist;
(ii) als Träger Wasser;
(iii) einen pH-Modifikator, ausgewählt aus der Gruppe, bestehend aus Triethanolamin und Triethylamin.

2. Anordnung nach Anspruch 1, wobei der Träger ausgewählt ist aus der Gruppe, bestehend aus einer Emulsion und einer Lösung auf Wasserbasis.

3. Anordnung nach Anspruch 1, ferner umfassend ein Vernetzungsmittel, wobei das Vernetzungsmittel ausgewählt ist aus der Gruppe, bestehend aus alkoxyfunktionalisierten Silanen und hydroxyfunktionalisierten Silanen.

4. Anordnung nach Anspruch 1, ferner umfassend einen Emulgator, wobei der Emulgator ausgewählt ist aus der Gruppe, bestehend aus der Verwendung von nichtionischen und ionischen Tensiden mit einem HLB-Wert von 3-25.

5. Anordnung nach Anspruch 1, wobei der pH-Modifikator Triethylamin ist.

6. Anordnung nach Anspruch 1, wobei X C3-Alkylen ist.

7. Anordnung nach Anspruch 1, wobei das der Formel I 3-Aminopropyltriethoxysilan ist.

8. Anordnung nach Anspruch 1, worin das Silan der Formel I ausgewählt ist aus der Gruppe, bestehend aus:
n-(2-Aminoethyl)-3-Aminopropylmethyldimethoxysilan;
4-Aminobutyltriethoxysilan;
3-Aminopropylmethyldimethoxysilan;
n-(2-Aminoethyl)-3-Aminopropyltrimethoxysilan;
bis(3-Trimethoxysilylpropyl)amin;
3-Aminopropylsilanetriol; und
Oligomeren der oben genannten vorgeformten oder *in situ* aus dem oben genannten Monomer gebildeten Oligomere.

9. Anordnung nach Anspruch 1, ferner umfassend einen Katalysator, ausgewählt aus der Gruppe, bestehend aus organischen Titanverbindungen und organischen Zinnverbindungen.

10. Verfahren zur Herstellung einer dauerhaften Dichtung auf einer Form, umfassend die folgenden Schritte:
(a) Bereitstellen einer Form, die aus einem Metall besteht, ausgewählt aus der Gruppe, bestehend aus Stahl, Edelstahl, Chrom, Gusseisen, Aluminium und Nickel, zum Bilden eines Teils, wobei die Form mindestens eine Oberfläche aufweist;
(b) Aufbringen einer Formdichtungszusammensetzung auf die mindestens eine Oberfläche, wobei die Formdichtungszusammensetzung einen pH-Wert von 10-11 aufweist, umfassend:
(i) ein Silan mit der Formel I: 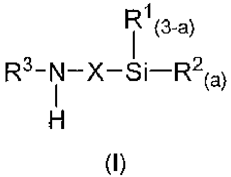 wobei:
R¹ ausgewählt ist aus der Gruppe, bestehend aus Hydroxy und Alkoxy;
R² Alkyl, Alkyen, Hydrid ist;
R³ ausgewählt ist aus der Gruppe, bestehend aus Wasserstoff und Alkyl, wobei das Alkyl gegebenenfalls durch eine Aminogruppe oder eine Alkoxysilylgruppe substituiert ist;
X C₁-C₆ Alkylen ist; und
a 0 oder 1 ist;
(ii) als Träger Wasser;
(iii) ein pH-Modifizierungsmittel, ausgewählt aus der Gruppe, bestehend aus Triethanolamin und Triethylamin; und
(c) Aussetzen der Formversiegelungszusammensetzung gegenüber Aushärtungsbedingungen für eine ausreichende Zeit, um zumindest eine teilweise Aushärtung zu bewirken, wodurch eine dauerhafte Dichtung auf der Form gebildet wird.

11. Verfahren nach Anspruch 10, wobei die Aushärtungsbedingungen 400 °F (204 C) für 5 Minuten oder 200 °F (93 C) für 30 Minuten betragen.

## Revendications

1. Ensemble moule scellé comprenant :
(a) un moule composé d'un métal choisi dans le groupe comprenant l'acier, l'acier inoxydable, le chrome, la fonte, l'aluminium et le nickel pour former une pièce, ledit moule ayant au moins une surface ;
(b) un revêtement sur ladite au moins une surface comprenant une composition d'enduit pour moule ayant un pH de 10 à 11, comprenant :
(i) un silane de formule I : 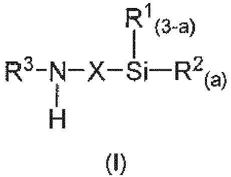 dans laquelle :
R¹ est choisi dans le groupe constitué des groupes hydroxy et alcoxy ;
R² est un alkyle, un alkylène, un hydrure ;
R³ est choisi dans le groupe constitué par l'hydrogène et un groupe alkyle, dans laquelle ledit groupe alkyle est éventuellement substitué par un groupe amino ou un groupe alcoxysilyle ;
X est un alkylène en C₁-C₆; et
a vaut 0 ou 1 ;
(ii) un porteur étant de l'eau ;
(iii) un modificateur de pH choisi dans le groupe constitué par la triéthanolamine et la triéthylamine.

2. Ensemble selon la revendication 1, dans lequel ledit porteur est choisi dans le groupe constitué par une émulsion et une solution aqueuse.

3. Ensemble selon la revendication 1, comprenant en outre un agent de réticulation, dans lequel ledit agent de réticulation est choisi dans le groupe constitué des silanes fonctionnalisés par alkoxy et des silanes fonctionnalisés par hydroxy.

4. Ensemble selon la revendication 1, comprenant en outre un émulsifiant, dans lequel ledit émulsifiant est choisi dans le groupe consistant à utiliser des tensioactifs non ioniques et ioniques avec un HLB de 3 à 25.

5. Ensemble selon la revendication 1, dans lequel ledit modificateur de pH est la triéthylamine.

6. Ensemble selon la revendication 1, dans lequel X est un groupe alkylène en C3.

7. Ensemble selon la revendication 1, dans lequel ledit silane de formule I est le 3-aminopropyltriéthoxysilane.

8. Ensemble selon la revendication 1, dans lequel ledit silane de formule I est choisi dans le groupe constitué de :
n-(2-aminoéthyl)-3-aminopropylméthyldiméthoxysilane ;
4-aminobutyltriéthoxysilane ;
3-aminopropylméthyldiméthoxysilane ;
n-(2-aminoéthyl)-3-aminopropyltriméthoxysilane ;
bis(3-triméthoxysilylpropyl)amine ;
3-aminopropylsilanetriol ; et
des oligomères précités préformés ou formés in situ à partir du monomère ci-dessus.

9. Ensemble selon la revendication 1, comprenant en outre un catalyseur choisi dans le groupe constitué des composés organiques du titane et des composés organiques de l'étain.

10. Procédé de fabrication d'un enduit durable sur un moule, comprenant les étapes consistant à :
(a) fournir un moule composé d'un métal choisi dans le groupe comprenant l'acier, l'acier inoxydable, le chrome, la fonte, l'aluminium et le nickel pour former une pièce, ledit moule ayant au moins une surface ;
(b) appliquer une composition d'enduit pour moule sur ladite au moins une surface, ladite composition d'enduit pour moule ayant un pH de 10 à 11 comprenant :
(i) un silane de formule I : 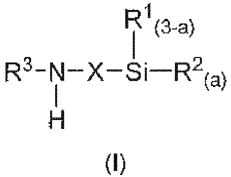 dans laquelle :
R¹ est choisi dans le groupe constitué des groupes hydroxy et alcoxy ;
R² est un alkyle, un alkylène, un hydrure ;
R³ est choisi dans le groupe constitué par l'hydrogène et un groupe alkyle, dans laquelle ledit groupe alkyle est éventuellement substitué par un groupe amino ou un groupe alcoxysilyle ;
X est un alkylène en C₁-C₆; et
a vaut 0 ou 1 ;
(ii) un porteur étant de l'eau ;
(iii) un modificateur de pH choisi dans le groupe constitué par la triéthanolamine et la triéthylamine ; et
(c) exposer ladite composition d'enduit pour moule à des conditions de durcissement pendant un temps suffisant pour effectuer un durcissement au moins partiel, formant ainsi un enduit durable sur ledit moule.

11. Procédé selon la revendication 10, dans lequel lesdites conditions de durcissement sont de 400 °F pendant 5 minutes ou de 200 °F pendant 30 minutes.
